# EUROPEAN PATENT APPLICATION

(11) **EP 4 704 192 A1**
(43) Date of publication of application: **04.03.2026**
(21) Application number: 24797078.3
(22) Date of filing: 24.04.2024
(51) Int. Cl.: H01M 4/62, C08F 279/02, H01M 4/13, H01M 4/139

(54) **BINDER COMPOSITION FOR SECONDARY BATTERY ELECTRODE, SLURRY COMPOSITION FOR SECONDARY BATTERY ELECTRODE, SECONDARY BATTERY ELECTRODE, AND SECONDARY BATTERY**

(30) Priority: 28.04.2023 JP 2023075025
(71) Applicant: Zeon Corporation, Tokyo 100-8246 (JP)
(72) Inventor: CHIFU Kenichiro, Tokyo 100-8246 (JP); YAMAMOTO Norikazu, Tokyo 100-8246 (JP)
(74) Representative: Maiwald GmbH
(86) International application number: PCT/JP2024/016123
(87) International publication number: WO 2024/225332

(57) **Abstract**

Provided is a binder composition for a secondary battery electrode that is capable of forming an electrode for a secondary battery in which crater formation at the electrode surface is inhibited and that can also reduce internal resistance of a secondary battery and cause the secondary battery to display excellent cycle characteristics. The binder composition for a secondary battery electrode contains a binder. The amount of coating film resulting after 10.0 g of a mixture obtained by adjusting the binder composition for a secondary battery electrode to a solid content concentration of 30 mass% with water is poured into a polytetrafluoroethylene petri dish of 10 cm in diameter and is left at rest at a temperature of 40°C for 2 hours is 1.3 g or less.

## Description

### TECHNICAL FIELD

The present disclosure relates to a binder composition for a secondary battery electrode, a slurry composition for a secondary battery electrode, an electrode for a secondary battery, and a secondary battery.

### BACKGROUND

Secondary batteries, examples of which include non-aqueous electrolyte solution secondary batteries (hereinafter, also referred to simply as "non-aqueous secondary batteries") in which an organic solvent electrolyte is used and all-solid-state secondary batteries in which a solid electrolyte is used instead of an organic solvent electrolyte, have characteristics such as compact size, light weight, high energy density, and the ability to be repeatedly charged and discharged and are used in a wide range of applications. Consequently, in recent years, studies have been made to improve battery members such as electrodes for the purpose of achieving even higher secondary battery performance.

An electrode for a secondary battery generally includes a current collector and an electrode mixed material layer (positive electrode mixed material layer or negative electrode mixed material layer) formed on the current collector. The electrode mixed material layer is formed through application onto a current collector of a slurry composition for a secondary battery electrode (hereinafter, also referred to simply as a "slurry composition") having an electrode active material, a binder-containing binder composition for a secondary battery electrode (hereinafter, also referred to simply as a "binder composition"), and so forth dispersed in a dispersion medium, and then drying of the applied slurry composition, for example.

In recent years, there have been attempts to improve binder compositions used in the formation of electrode mixed material layers in order to further improve secondary battery performance.

As one example, Patent Literature (PTL) 1 discloses a binder composition for an electrode in which the concentration of coarse particles and/or aggregates having a sphere volume equivalent diameter of 3 µm or more is 2,000 ppm or less. According to PTL 1, the use of this binder composition enables stable production of batteries with a high capacity maintenance rate even when the speed of a production process is increased or the roll length of a current collector is lengthened.

### CITATION LIST

### Patent Literature

PTL 1: JP2011-76917A

### SUMMARY

### (Technical Problem)

However, when a slurry composition that contains the conventional binder composition described above has been used to form an electrode mixed material layer, there have been instances in which fine defects (hereinafter, referred to as "craters") that are depressed with a circular shape or the like have formed at an electrode surface. Moreover, the use of an electrode in which such craters have formed has resulted in problems of higher internal resistance and poorer cycle characteristics in a secondary battery.

Accordingly, one object of the present disclosure is to provide a binder composition for a secondary battery electrode and a slurry composition for a secondary battery electrode that are capable of forming an electrode for a secondary battery in which crater formation at the electrode surface is inhibited and that can also reduce internal resistance of a secondary battery and cause the secondary battery to display excellent cycle characteristics.

Another object of the present disclosure is to provide an electrode for a secondary battery in which crater formation at the electrode surface is inhibited and that can also reduce internal resistance of a secondary battery and cause the secondary battery to display excellent cycle characteristics.

Yet another object of the present disclosure is to provide a secondary battery that has reduced internal resistance and excellent cycle characteristics.

### (Solution to Problem)

The inventors conducted diligent investigation with the aim of solving the problem set forth above. The inventors discovered that by using a binder composition with which the amount of coating film formed when the binder composition is left at rest under specific conditions is not more than a specific value, it is possible to form an electrode in which crater formation is inhibited and a secondary battery having reduced internal resistance and excellent cycle characteristics, and, in this manner, the inventors completed the present disclosure.

Specifically, the present disclosure is aimed at advantageously solving the problem set forth above, and, according to the present disclosure, binder compositions for a secondary battery electrode according to the following {1} to {6}, a slurry composition for a secondary battery electrode according to the following {7}, an electrode for a secondary battery according to the following {8}, and a secondary battery according to the following {9} are provided.

{1} A binder composition for a secondary battery electrode comprising a binder, wherein an amount of coating film resulting after 10.0 g of a mixture obtained by adjusting the binder composition for a secondary battery electrode to a solid content concentration of 30 mass% with water is poured into a polytetrafluoroethylene petri dish of 10 cm in diameter and is left at rest at a temperature of 40°C for 2 hours is 1.3 g or less.

Through a binder composition that results in an amount of coating film under specific conditions that is not more than the value set forth above, it is possible to produce an electrode in which crater formation at the surface thereof is inhibited. Moreover, through an electrode that is produced in this manner, it is possible to reduce internal resistance of a secondary battery while also causing the secondary battery to display excellent cycle characteristics.

Note that the "amount of coating film" referred to in the present disclosure can be measured by a method described in the EXAMPLES section of the present specification.

{2} The binder composition for a secondary battery electrode according to the foregoing {1}, wherein the binder includes a particulate polymer, and the particulate polymer includes a nitrile group-containing monomer unit in a proportion of not less than 1 mass% and not more than 9 mass% and includes an ethylenically unsaturated carboxylic acid ester monomer unit in a proportion of not less than 1 mass% and not more than 9 mass%.

When the binder composition contains a particulate polymer that includes a nitrile group-containing monomer unit and an ethylenically unsaturated carboxylic acid ester monomer unit in the proportions set forth above, crater formation at an electrode surface can be further inhibited, and internal resistance of a secondary battery can be further reduced while also even further enhancing cycle characteristics of the secondary battery.

Note that a "monomer unit" of a polymer referred to in the present disclosure means a "repeating unit derived from the monomer that is included in a polymer obtained using that monomer".

Also note that the proportional content of a monomer unit in a polymer referred to in the present disclosure can be measured by a method described in the EXAMPLES section of the present specification.

{3} The binder composition for a secondary battery electrode according to the foregoing {2}, wherein the particulate polymer is a random copolymer.

When the particulate polymer contained in the binder composition is a random copolymer, crater formation at an electrode surface can be further inhibited, and internal resistance of a secondary battery can be further reduced while also even further enhancing cycle characteristics of the secondary battery.

{4} The binder composition for a secondary battery electrode according to the foregoing {2} or {3}, wherein when an average particle diameter of the particulate polymer measured by dynamic light scattering is taken to be Da, in units of nanometers, and a volume-average particle diameter of the particulate polymer measured by laser diffraction/scattering is taken to be Db, in units of nanometers, a ratio Da/Db of Da relative to Db is not less than 1.1 and not more than 2.0.

When Da/Db is within the range set forth above, crater formation at an electrode surface can be further inhibited, and internal resistance of a secondary battery can be further reduced while also even further enhancing cycle characteristics of the secondary battery. Moreover, peel strength of an electrode can be improved.

Note that the "average particle diameter Da" of a particulate polymer referred to in the present disclosure means the "particle diameter (D50) at which cumulative frequency of light scattering intensity calculated from a small diameter end of a particle size distribution measured by dynamic light scattering reaches 50%" and can be measured by a method described in the EXAMPLES section of the present specification.

Also note that the "volume-average particle diameter Db" of a particulate polymer referred to in the present disclosure means the "particle diameter (D50) at which cumulative volume calculated from a small diameter end of a particle size distribution (by volume) measured by laser diffraction/scattering reaches 50%" and can be measured by a method described in the EXAMPLES section of the present specification.

{5} The binder composition for a secondary battery electrode according to any one of the foregoing {1} to {4}, wherein viscosity of the binder composition for a secondary battery electrode under a condition of a solid content concentration of 30 mass% is not less than 60 mPa·s and not more than 3,000 mPa·s.

Through a binder composition having a viscosity of not less than 60 mPa·s and not more than 3,000 mPa·s under a condition of a solid content concentration of 30 mass%, it is possible to further inhibit crater formation at an electrode surface and to further reduce internal resistance of a secondary battery while also even further enhancing cycle characteristics of the secondary battery. Moreover, peel strength of an electrode can be improved.

Note that the "viscosity" of a binder composition under a condition of a solid content concentration of 30 mass% referred to in the present disclosure can be measured by a method described in the EXAMPLES section of the present specification.

{6} The binder composition for a secondary battery electrode according to any one of the foregoing {1} to {5}, further comprising water and having a pH of not lower than 6 and not higher than 10.

When the pH of the binder composition is within the range set forth above, crater formation at an electrode surface can be further inhibited, and internal resistance of a secondary battery can be further reduced while also even further enhancing cycle characteristics of the secondary battery. Moreover, peel strength of an electrode can be improved.

Note that the "pH" of a binder composition referred to in the present disclosure means the pH measured under a condition of a temperature of 25°C.

{7} A slurry composition for a secondary battery electrode comprising: an electrode active material; and the binder composition for a secondary battery electrode according to any one of the foregoing {1} to {6}.

Through a slurry composition that contains an electrode active material and any one of the binder compositions set forth above, it is possible to produce an electrode in which crater formation at the surface thereof is inhibited. Moreover, through an electrode that is produced in this manner, it is possible to reduce internal resistance of a secondary battery while also causing the secondary battery to display excellent cycle characteristics.

{8} An electrode for a secondary battery comprising an electrode mixed material layer formed using the slurry composition for a secondary battery electrode according to the foregoing {7}.

In the case of an electrode that includes an electrode mixed material layer obtained using a slurry composition containing an electrode active material and any one of the binder compositions set forth above, crater formation at the electrode surface is inhibited. Moreover, through this electrode, it is possible to reduce internal resistance of a secondary battery while also causing the secondary battery to display excellent cycle characteristics.

{9} A secondary battery comprising the electrode for a secondary battery according to the foregoing {8}.

By using the electrode for a secondary battery set forth above, it is possible to produce a secondary battery having reduced internal resistance and excellent cycle characteristics.

### (Advantageous Effect)

According to the present disclosure, it is possible to provide a binder composition for a secondary battery electrode and a slurry composition for a secondary battery electrode that are capable of forming an electrode for a secondary battery in which crater formation at the electrode surface is inhibited and that can also reduce internal resistance of a secondary battery and cause the secondary battery to display excellent cycle characteristics.

Moreover, according to the present disclosure, it is possible to provide an electrode for a secondary battery in which crater formation at the electrode surface is inhibited and that can reduce internal resistance of a secondary battery and cause the secondary battery to display excellent cycle characteristics.

Furthermore, according to the present disclosure, it is possible to provide a secondary battery that has reduced internal resistance and excellent cycle characteristics.

### DETAILED DESCRIPTION

The following provides a detailed description of embodiments of the present disclosure.

A presently disclosed binder composition can be used to produce a presently disclosed slurry composition. Moreover, the presently disclosed slurry composition can be used to form an electrode (electrode for a secondary battery) of a secondary battery such as a non-aqueous secondary battery or an all-solid-state secondary battery. Furthermore, a feature of a presently disclosed electrode is that it includes an electrode mixed material layer formed from the presently disclosed slurry composition. Also, a feature of a presently disclosed secondary battery is that it includes an electrode produced using the presently disclosed slurry composition.

### (Binder composition for secondary battery electrode)

The presently disclosed binder composition contains a binder and can optionally contain a solvent. Moreover, the presently disclosed binder composition can further contain components other than the binder and the solvent (i.e., other components).

A feature of the presently disclosed binder composition is that an amount of coating film resulting after 10.0 g of a mixture obtained by adjusting the binder composition to a solid content concentration of 30 mass% with water is poured into a polytetrafluoroethylene petri dish of 10 cm in diameter and is left at rest under specific conditions is 1.3 g or less.

As a consequence of the presently disclosed binder composition resulting in an amount of coating film that is not more than the value set forth above, it is possible to inhibit crater formation at an electrode surface and to reduce internal resistance of a secondary battery while also causing the secondary battery to display excellent cycle characteristics by using this binder composition. Although it is not certain why the above-described effects are obtained through use of the presently disclosed binder composition, the reason is presumed to be as follows.

Firstly, the pH of a binder composition may decrease during storage under the influence of air oxidation, rotting, or the like. Studies conducted by the inventors have revealed that this reduction of pH can cause weakening of electrostatic repulsion between solid components (binder, etc.) in the binder composition and can cause the solid components to aggregate through hydrophobic interactions and thereby form a coating film. Such a coating film is thought to swell and display flexibility in a solvent of a binder composition and/or slurry composition, to pass through a filter used in order to remove foreign substances during production of a slurry composition or formation of an electrode mixed material layer, and to cause the formation of craters at an electrode surface, thereby negatively affecting internal resistance and cycle characteristics of a secondary battery.

In response to the above, the presently disclosed binder composition can inhibit the formation of a coating film such as described above during storage as a result of the amount of coating film that is formed under specific conditions being 1.3 g or less. Consequently, through use of the presently disclosed binder composition, it is thought to be possible to inhibit crater formation at an electrode surface and to reduce internal resistance of a secondary battery while also causing the secondary battery to display excellent cycle characteristics.

### <Binder>

The binder holds components such as an electrode active material in an electrode mixed material layer that has been formed using a slurry composition containing the binder composition and thereby prevents shedding of components from the electrode mixed material layer. Any binder that can be used inside of a secondary battery may be used without any specific limitations as the binder. For example, a polymer that is obtained through polymerization of a monomer composition containing a monomer that can express binding capacity can be used as the binder. Note that one binder may be used individually, or two or more binders may be used in combination in a freely selected ratio. The following provides a detailed description of a particulate polymer that can suitably be used as the binder.

### <<Particulate polymer>>

The particulate polymer is water-insoluble particles that are formed of a specific polymer. Note that when particles of a polymer are said to be "water-insoluble" in the present disclosure, this means that when 0.5 g of the polymer is dissolved in 100 g of water at a temperature of 25°C, insoluble content is 90 mass% or more.

No specific limitations are placed on the particulate polymer so long as it is a particulate polymer that is water-insoluble and that can be dispersed in a solvent such as water. However, from a viewpoint of further inhibiting crater formation at an electrode surface and further reducing internal resistance of a secondary battery while also even further enhancing cycle characteristics of the secondary battery, it is preferable that the particulate polymer includes either or both of a nitrile group-containing monomer unit and an ethylenically unsaturated carboxylic acid ester monomer unit, and more preferable that the particulate polymer includes both a nitrile group-containing monomer unit and an ethylenically unsaturated carboxylic acid ester monomer unit. Note that the particulate polymer may optionally further include monomer units other than a nitrile group-containing monomer unit and an ethylenically unsaturated carboxylic acid ester monomer unit (hereinafter, also referred to as "other monomer units").

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile and methacrylonitrile are preferable from a viewpoint of further inhibiting crater formation at an electrode surface and further reducing internal resistance of a secondary battery while also even further enhancing cycle characteristics of the secondary battery, with acrylonitrile being more preferable. Note that one nitrile group-containing monomer may be used individually, or two or more nitrile group-containing monomers may be used in combination in a freely selected ratio.

The proportional content of nitrile group-containing monomer units in the particulate polymer when the amount of all monomer units in the particulate polymer is taken to be 100 mass% is preferably 1 mass% or more, more preferably 1.5 mass% or more, and even more preferably 2 mass% or more, and is preferably 9 mass% or less, more preferably 5 mass% or less, and even more preferably 3.5 mass% or less. When the proportional content of nitrile group-containing monomer units in the particulate polymer is not less than any of the lower limits set forth above, coating film formation due to aggregation of the particulate polymer can be inhibited. Consequently, crater formation at an electrode surface can be further inhibited, and internal resistance of a secondary battery can be further reduced while also even further enhancing cycle characteristics of the secondary battery. On the other hand, when the proportional content of nitrile group-containing monomer units in the particulate polymer is not more than any of the upper limits set forth above, coating film formation can be inhibited through inhibition of an excessive increase of slurry composition viscosity. Consequently, crater formation at an electrode surface can be further inhibited, and internal resistance of a secondary battery can be further reduced while also even further enhancing cycle characteristics of the secondary battery.

### [Ethylenically unsaturated carboxylic acid ester monomer unit]

Examples of ethylenically unsaturated carboxylic acid ester monomers that can form an ethylenically unsaturated carboxylic acid ester monomer unit include a monomer formed of an ester of an ethylenically unsaturated monocarboxylic acid and a monomer formed of a diester of an ethylenically unsaturated dicarboxylic acid.

The monomer formed of an ester of an ethylenically unsaturated monocarboxylic acid may be a (meth)acrylic acid ester monomer, for example. Note that in the present disclosure, "(meth)acryl" is used to indicate "acryl" and/or "methacryl".

Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate.

Moreover, the monomer formed of a diester of an ethylenically unsaturated dicarboxylic acid may be a maleic acid dialkyl ester such as diethyl maleate or dibutyl maleate; a fumaric acid dialkyl ester such as diethyl fumarate or dibutyl fumarate; an itaconic acid dialkyl ester such as diethyl itaconate or dibutyl itaconate; or the like.

Of these ethylenically unsaturated carboxylic acid ester monomers, (meth)acrylic acid ester monomers are preferable from a viewpoint of further inhibiting crater formation at an electrode surface and further reducing internal resistance of a secondary battery while also even further enhancing cycle characteristics of the secondary battery, with methyl methacrylate being more preferable. Note that one ethylenically unsaturated carboxylic acid ester monomer may be used individually, or two or more ethylenically unsaturated carboxylic acid ester monomers may be used in combination in a freely selected ratio.

The proportional content of ethylenically unsaturated carboxylic acid ester monomer units in the particulate polymer when the amount of all monomer units in the particulate polymer is taken to be 100 mass% is preferably 1 mass% or more, more preferably 1.5 mass% or more, and even more preferably 2 mass% or more, and is preferably 9 mass% or less, more preferably 5 mass% or less, and even more preferably 3.5 mass% or less. When the proportional content of ethylenically unsaturated carboxylic acid ester monomer units in the particulate polymer is not less than any of the lower limits set forth above, coating film formation due to aggregation of the particulate polymer can be inhibited. Consequently, crater formation at an electrode surface can be further inhibited, and internal resistance of a secondary battery can be further reduced while also even further enhancing cycle characteristics of the secondary battery. On the other hand, when the proportional content of ethylenically unsaturated carboxylic acid ester monomer units in the particulate polymer is not more than any of the upper limits set forth above, coating film formation can be inhibited through inhibition of an excessive increase of slurry composition viscosity. Consequently, crater formation at an electrode surface can be further inhibited, and internal resistance of a secondary battery can be further reduced while also even further enhancing cycle characteristics of the secondary battery.

### [Other monomer units]

No specific limitations are placed on other monomer units included in the particulate polymer. For example, an aromatic vinyl monomer unit, an aliphatic conjugated diene monomer unit, and an acidic group-containing monomer unit are preferable as other monomer units. In particular, it is preferable that the particulate polymer includes an aliphatic conjugated diene monomer unit as another monomer unit, and more preferable that the particulate polymer includes both an aromatic vinyl monomer unit and an aliphatic conjugated diene monomer unit as other monomer units.

### -Aromatic vinyl monomer unit-

Examples of aromatic vinyl monomers that can form an aromatic vinyl monomer unit include aromatic monovinyl compounds such as styrene, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers can be used individually, or two or more of these aromatic vinyl monomers can be used in combination, it is preferable that one of these aromatic vinyl monomers is used individually.

The proportional content of aromatic vinyl monomer units in the particulate polymer when the amount of all monomer units in the particulate polymer is taken to be 100 mass% is preferably 5 mass% or more, more preferably 10 mass% or more, and even more preferably 20 mass% or more, and is preferably 65 mass% or less, more preferably 55 mass% or less, even more preferably 47 mass% or less, and particularly preferably 23 mass% or less. When the proportional content of aromatic vinyl monomer units in the particulate polymer is not less than any of the lower limits set forth above, stability of a slurry composition can be increased. On the other hand, when the proportional content of aromatic vinyl monomer units in the particulate polymer is not more than any of the upper limits set forth above, peel strength of an electrode can be improved.

### -Aliphatic conjugated diene monomer unit-

Examples of aliphatic conjugated diene monomers that can form an aliphatic conjugated diene monomer unit include conjugated diene compounds having a carbon number of 4 or more such as 1,3-butadiene, isoprene, 2,3-dimethyl-1,3-butadiene, and 1,3-pentadiene. Of these aliphatic conjugated diene monomers, 1,3-butadiene and isoprene are preferable, and 1,3-butadiene is more preferable. One of these aliphatic conjugated diene monomers can be used individually, or two or more of these aliphatic conjugated diene monomers can be used in combination.

The proportional content of aliphatic conjugated diene monomer units in the particulate polymer when the amount of all monomer units in the particulate polymer is taken to be 100 mass% is preferably 30 mass% or more, more preferably 40 mass% or more, even more preferably 50 mass% or more, and particularly preferably 67 mass% or more, and is preferably 90 mass% or less, more preferably 85 mass% or less, even more preferably 77 mass% or less, and particularly preferably 72 mass% or less. When the proportional content of aliphatic conjugated diene monomer units in the particulate polymer is not less than any of the lower limits set forth above, peel strength of an electrode can be improved. On the other hand, when the proportional content of aliphatic conjugated diene monomer units in the particulate polymer is not more than any of the upper limits set forth above, stability of a slurry composition can be increased.

### -Acidic group-containing monomer unit-

Examples of acidic group-containing monomers that can form an acidic group-containing monomer unit include carboxy group-containing monomers, sulfo group-containing monomers, and phosphate group-containing monomers. Note that an acidic group included in an acidic group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the above-described acidic group-containing monomers may be used individually, or two or more of the above-described acidic group-containing monomers may be used in combination. Moreover, from a viewpoint of increasing stability of a slurry composition and improving peel strength of an electrode, carboxy group-containing monomers are preferable, monocarboxylic acids and dicarboxylic acids are more preferable, acrylic acid, methacrylic acid, and itaconic acid are even more preferable, methacrylic acid and itaconic acid are further preferable, and methacrylic acid is particularly preferable as an acidic group-containing monomer that can form an acidic group-containing monomer unit.

The proportional content of acidic group-containing monomer units in the particulate polymer when the amount of all monomer units in the particulate polymer is taken to be 100 mass% is preferably 2 mass% or more, and more preferably 2.5 mass% or more, and is preferably 9 mass% or less, more preferably 5 mass% or less, and even more preferably 4 mass% or less. When the proportional content of acidic group-containing monomer units in the particulate polymer is not less than any of the lower limits set forth above, coating film formation due to aggregation of the particulate polymer can be inhibited. Consequently, crater formation at an electrode surface can be further inhibited, and internal resistance of a secondary battery can be further reduced while also even further enhancing cycle characteristics of the secondary battery. On the other hand, when the proportional content of acidic group-containing monomer units in the particulate polymer is not more than any of the upper limits set forth above, coating film formation can be inhibited through inhibition of an excessive increase of slurry composition viscosity. Consequently, crater formation at an electrode surface can be further inhibited, and internal resistance of a secondary battery can be further reduced while also even further enhancing cycle characteristics of the secondary battery.

### [Structure of particulate polymer]

The particulate polymer may be a random copolymer, a block copolymer, an alternating copolymer, or the like, for example. Moreover, from a viewpoint of further inhibiting crater formation at an electrode surface and further reducing internal resistance of a secondary battery while also even further enhancing cycle characteristics of the secondary battery, it is preferable that the particulate polymer is a random copolymer.

The particulate polymer may be a particulate polymer having a uniform monomer unit composition (types and proportional contents of monomer units) or may be a particulate polymer having a non-uniform monomer unit composition. The particulate polymer having a non-uniform monomer unit composition may be a particulate polymer having a core-shell structure that includes a core portion and a shell portion at least partially covering an outer surface of the core portion and in which the core portion and the shell portion have different monomer unit compositions, a particulate polymer in which only a nuclear portion thereof has a different monomer unit composition, or the like, for example.

From a viewpoint of further inhibiting crater formation at an electrode surface and further reducing internal resistance of a secondary battery while also even further enhancing cycle characteristics of the secondary battery, it is preferable that the particulate polymer has a core-shell structure including a core portion that is formed of a copolymer including an aromatic vinyl monomer unit and an aliphatic conjugated diene monomer unit and a shell portion that is formed of a polymer including an acidic group-containing monomer unit. Although the core-shell structure of the particulate polymer may further include other constituent elements other than the core portion and the shell portion, it is preferable that the core-shell structure is composed of only the core portion and the shell portion.

The copolymer forming the core portion in the core-shell structure of the particulate polymer may include monomer units other than an aromatic vinyl monomer unit and an aliphatic conjugated diene monomer unit or may include only an aromatic vinyl monomer unit and an aliphatic conjugated diene monomer unit. Examples of monomer units other than an aromatic vinyl monomer unit and an aliphatic conjugated diene monomer unit that may be included in the copolymer forming the core portion include an acidic group-containing monomer unit.

Moreover, the shell portion in the core-shell structure of the particulate polymer may be formed of a copolymer that includes monomer units other than an acidic group-containing monomer unit or may be formed of a homopolymer that includes only an acidic group-containing monomer unit, for example. From a viewpoint of further inhibiting crater formation at an electrode surface and further reducing internal resistance of a secondary battery while also even further enhancing cycle characteristics of the secondary battery, it is preferable that the shell portion in the core-shell structure of the particulate polymer is formed of a copolymer that includes an acidic group-containing monomer unit and either or both of a nitrile group-containing monomer unit and an ethylenically unsaturated carboxylic acid ester monomer unit, and more preferable that the shell portion in the core-shell structure of the particulate polymer is formed of a copolymer that includes an acidic group-containing monomer unit, a nitrile group-containing monomer unit, and an ethylenically unsaturated carboxylic acid ester monomer unit. Moreover, the copolymer forming the shell portion may include an aromatic vinyl monomer unit such as a styrene unit.

In a case in which the particulate polymer has a core-shell structure, the proportion constituted by the core portion in the particulate polymer when the mass of the entire particulate polymer is taken to be 100 mass% is preferably 80 mass% or more, more preferably 85 mass% or more, and even more preferably 90 mass% or more, and is preferably 98 mass% or less, and more preferably 97.5 mass% or less. When the proportion constituted by the core portion in the particulate polymer is not less than any of the lower limits set forth above, crater formation at an electrode surface can be further inhibited, and internal resistance of a secondary battery can be further reduced while also even further enhancing cycle characteristics of the secondary battery. On the other hand, when the proportion constituted by the core portion in the particulate polymer is not more than any of the upper limits set forth above, peel strength of an electrode can be improved.

In a case in which the particulate polymer has a core-shell structure, the proportion constituted by the shell portion in the particulate polymer when the mass of the entire particulate polymer is taken to be 100 mass% is preferably 2 mass% or more, and more preferably 2.5 mass% or more, and is preferably 20 mass% or less, more preferably 15 mass% or less, and even more preferably 10 mass% or less. When the proportion constituted by the shell portion in the particulate polymer is not less than any of the lower limits set forth above, peel strength of an electrode formed using the binder composition can be improved. On the other hand, when the proportion constituted by the shell portion in the particulate polymer is not more than any of the upper limits set forth above, crater formation at an electrode surface can be further inhibited, and internal resistance of a secondary battery can be further reduced while also even further enhancing cycle characteristics of the secondary battery.

### [Properties of particulate polymer]

### -Average particle diameter Da measured by dynamic light scattering-

The average particle diameter Da of the particulate polymer is preferably 100 nm or more, more preferably 130 nm or more, and even more preferably 150 nm or more, and is preferably 340 nm or less, more preferably 300 nm or less, even more preferably 260 nm or less, and particularly preferably 240 nm or less.

Note that the value of the average particle diameter Da measured by dynamic light scattering is a value that comparatively strongly reflects spatial spreading out of molecular chains in a surface layer portion of the particulate polymer. In other words, in a case in which the particulate polymer has a core-shell structure such as previously described, for example, the value of the average particle diameter Da of the particulate polymer is presumed to be dependent on the particle diameter of the overall core-shell structure of the particulate polymer. Accordingly, the value of the average particle diameter Da of the particulate polymer can be adjusted by altering the types and amounts of monomers used to form the particulate polymer and the polymerization method and conditions, for example.

### -Volume-average particle diameter Db measured by laser diffraction/scattering-

The volume-average particle diameter Db of the particulate polymer is preferably 100 nm or more, more preferably 110 nm or more, and even more preferably 120 nm or more, and is preferably 170 nm or less, more preferably 160 nm or less, and even more preferably 150 nm or less. When the volume-average particle diameter Db of the particulate polymer is within any of the ranges set forth above, peel strength of an electrode can be improved. Moreover, when the volume-average particle diameter Db of the particulate polymer is not less than any of the lower limits set forth above, injectability of electrolyte solution in a secondary battery can be improved, and internal resistance of the secondary battery can also be even further reduced.

Note that the volume-average particle diameter Db measured by laser diffraction/scattering is not significantly influenced by spatial spreading out of molecular chains in a surface layer portion of the particulate polymer. In other words, in a case in which the particulate polymer has a core-shell structure such as previously described, for example, the value of the volume-average particle diameter Db of the particulate polymer is slightly influenced by the shell portion but is largely dependent on the particle diameter of the core portion. Accordingly, the value of the volume-average particle diameter Db of the particulate polymer can be adjusted by altering the types and amounts of monomers used to form the core portion of the particulate polymer and the polymerization method and conditions, for example.

### -Da/Db-

A ratio (Da/Db) of the average particle diameter Da relative to the volume-average particle diameter Db of the particulate polymer is preferably 1.1 or more, more preferably 1.15 or more, and even more preferably 1.3 or more, and is preferably 2.0 or less, more preferably 1.9 or less, and even more preferably 1.8 or less. When Da/Db is not less than any of the lower limits set forth above, peel strength of an electrode can be improved, presumably because movement (migration) of the particulate polymer toward a surface side of an electrode mixed material layer (i.e., an opposite side to a current collector side) during formation of an electrode mixed material layer on a current collector using a slurry composition can be inhibited and the particulate polymer can thus be present in the electrode mixed material layer in a well dispersed state. Moreover, when Da/Db is not more than any of the upper limits set forth above, coating film formation can be inhibited by inhibiting an excessive increase of viscosity of the binder composition. Consequently, crater formation at an electrode surface can be further inhibited, and internal resistance of a secondary battery can be further reduced while also even further enhancing cycle characteristics of the secondary battery.

### [Production method of particulate polymer]

No specific limitations are placed on the method by which the particulate polymer is produced. For example, the particulate polymer can be produced through polymerization, in an emulsion, of monomers serving as a basis for monomer units that are included in the particulate polymer. Such a polymerization method may be a batch emulsion polymerization method, an emulsion (Em) prop method, or a seeded polymerization method, for example, and is preferably a batch emulsion polymerization method.

The batch emulsion polymerization can be performed according to the following procedure, for example. First, monomers serving as a basis of monomer units that are included in the particulate polymer are mixed with water, an emulsifier, and a polymerization initiator. The mixture (emulsion) is heated to perform a polymerization reaction. At the point at which a specific polymerization conversion rate is reached, cooling is performed to quench the reaction to yield a mixture containing a particulate polymer. Unreacted monomer is removed from the mixture to obtain a water dispersion of the particulate polymer.

In production of the particulate polymer by a batch emulsion polymerization method, it is preferable to perform two-stage polymerization in which addition of monomers is split into two additions rather than single-stage polymerization in which monomers are added all at once from a viewpoint of making it easy to keep the amount of coating film of the binder composition as not more than a specific value. By producing the particulate polymer by two-stage polymerization, it is possible to obtain a particulate polymer having a core-shell structure including a core portion that is formed of monomer units derived from monomers added in a first stage of polymerization and a shell portion that is formed of monomer units derived from monomers added in a second stage of polymerization.

In the first stage of polymerization, monomers for core portion formation are mixed with water, an emulsifier, a chain transfer agent, and a polymerization initiator. The mixture is heated, and a polymerization reaction is performed until a specific polymerization conversion rate is reached to thereby form a particle polymer formed of a core portion.

In the second stage of polymerization, monomers for shell portion formation and optionally an emulsifier and water are continuously added to the reaction liquid present after the reaction in the first stage of polymerization, and polymerization is continued. At the point at which a specific polymerization conversion rate has been reached, cooling is performed to quench the reaction to yield a mixture containing a particulate polymer. Unreacted monomer is removed from the mixture to obtain a water dispersion of a particulate polymer that has a core-shell structure.

Heating in the polymerization reaction may be performed at 40°C or higher, 45°C or higher, 50°C or higher, 55°C or higher, or 60°C or higher, for example, and may be performed at 90°C or lower, 85°C or lower, 80°C or lower, 75°C or lower, or 70°C or lower, for example. Note that removal of unreacted monomer from the mixture may be performed by thermal-vacuum distillation or by blowing in steam, for example.

The emulsifier used in production of the particulate polymer may be an alkyl diphenyl ether disulfonic acid, dodecylbenzenesulfonic acid, lauryl sulfuric acid, or a salt (for example, a potassium salt or sodium salt) of any thereof, for example. Of these emulsifiers, an alkyl diphenyl ether disulfonic acid salt is preferable.

The polymerization initiator used in production of the particulate polymer may be potassium persulfate, n-butyllithium, or ammonium persulfate, for example. Of these polymerization initiators, potassium persulfate is preferable.

The chain transfer agent used in production of the particulate polymer may be α-methylstyrene dimer, tert-dodecyl mercaptan, or 3-mercapto-1,2-propanediol, for example. Of these chain transfer agents, tert-dodecyl mercaptan is preferable.

### <Solvent>

The presently disclosed binder composition normally contains a solvent, though no specific limitations are made. For example, the presently disclosed binder composition may contain only water as a solvent, may contain only an organic solvent (for example, an ester, a ketone, or an alcohol) as a solvent, or may contain a mixture of water and an organic solvent as a solvent. From a viewpoint of further inhibiting crater formation at an electrode surface and further reducing internal resistance of a secondary battery while also even further enhancing cycle characteristics of the secondary battery, it is preferable that the presently disclosed binder composition contains water as a solvent.

The proportion constituted by water among a solvent in the presently disclosed binder composition when the total amount of the solvent is taken to be 100 mass% is preferably 70 mass% or more, more preferably 90 mass% or more, even more preferably 99 mass% or more, and particularly preferably 100 mass% (i.e., it is particularly preferable that the presently disclosed binder composition contains only water as a solvent). When the proportion constituted by water among a solvent in the binder composition is not less than any of the lower limits set forth above, crater formation at an electrode surface can be further inhibited, and internal resistance of a secondary battery can be further reduced while also even further enhancing cycle characteristics of the secondary battery.

### <Other components>

Besides the binder and the solvent described above, the presently disclosed binder composition may contain an acidic water-soluble polymer, an antioxidant, a preservative, or the like, for example. Note that one of these other components may be used individually, or two or more of these other components may be used in combination in a freely selected ratio.

The acidic water-soluble polymer that can be contained in the presently disclosed binder composition can, for example, be produced through polymerization as a by-product from a monomer serving as a raw material of the particulate polymer in production of the particulate polymer by polymerization.

The weight-average molecular weight of such an acidic water-soluble polymer is preferably 500 or more, more preferably 700 or more, and even more preferably 1,000 or more, and is preferably 20,000 or less, more preferably 15,000 or less, even more preferably 8,000 or less, and particularly preferably 3,500 or less. When the weight-average molecular weight of the acidic water-soluble polymer is not less than any of the lower limits set forth above, peel strength of an electrode can be improved. Moreover, when the weight-average molecular weight of the acidic water-soluble polymer is not more than any of the upper limits set forth above, crater formation at an electrode surface can be further inhibited, and internal resistance of a secondary battery can be further reduced while also even further enhancing cycle characteristics of the secondary battery.

Note that the acidic water-soluble polymer may be in the form of a salt (salt of an acidic water-soluble polymer). In other words, the term "acidic water-soluble polymer" as used in the present disclosure also encompasses salts of the acidic water-soluble polymer.

The antioxidant may be a hindered phenol antioxidant (for example, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], or 2,4,6-tris(3',5'-di-tert-butyl-4'-hydroxybenzyl)mesitylene), an oligomeric phenolic antioxidant (for example, WINGSTAY^{®} L (WINGSTAY is a registered trademark in Japan, other countries, or both)), a phosphite antioxidant (for example, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, or tris(2,4-di-tert-butylphenyl) phosphite), a sulfuric antioxidant (for example, didodecyl 3,3'-thiodipropionate), or the like. Of these antioxidants, oligomeric phenolic antioxidants are preferable.

The additive amount of the antioxidant is preferably 0.1 parts by mass or more, and more preferably 1 part by mass or more relative to 100 parts by mass of the particulate polymer, and is preferably 10 parts by mass or less, and more preferably 5 parts by mass or less relative to 100 parts by mass of the particulate polymer.

The preservative may be a known preservative such as an isothiazoline compound or 2-bromo-2-nitro-1,3-propanediol, for example. The isothiazoline compound may be any of those described in JP2013-211246A, JP2005-097474A, JP2013-206624A, etc., without any specific limitations. Note that one preservative may be used individually, or two or more preservatives may be used in combination. The preservative is preferably 1,2-benzisothiazolin-3-one, 2-methyl-4-isothiazolin-3-one, 5-chloro-2-methyl-4-isothiazolin-3-one, or 2-bromo-2-nitro-1,3-propanediol, and is more preferably 1,2-benzisothiazolin-3-one.

The amount of the preservative that is contained in the binder composition is preferably 0.01 parts by mass or more relative to 100 parts by mass of the particulate polymer, and is preferably 0.5 parts by mass or less, more preferably 0.4 parts by mass or less, and even more preferably 0.3 parts by mass or less relative to 100 parts by mass of the particulate polymer. The formation of aggregates in the binder composition after long-term storage can be even further inhibited when the content of the preservative is 0.01 parts by mass or more per 100 parts by mass of the particulate polymer, whereas sufficiently high peel strength of an electrode can be ensured when the content of the preservative is 0.5 parts by mass or less per 100 parts by mass of the particulate polymer.

### <<Properties of binder composition>>

### [Amount of coating film]

The presently disclosed binder composition is required to result in an amount of coating film that is 1.3 g or less. Moreover, the amount of coating film of the binder composition is preferably 1.0 g or less, more preferably 0.8 g or less, even more preferably 0.7 g or less, further preferably 0.6 g or less, and particularly preferably 0.5 g or less, and is preferably 0.05 g or more, and more preferably 0.1 g or more. In a situation in which the amount of coating film exceeds 1.3 g, the number of craters at an electrode surface increases, internal resistance of a secondary battery increases, and cycle characteristics of the secondary battery deteriorate. When the amount of coating film is 1.0 g or less, crater formation at an electrode surface can be further inhibited, and internal resistance of a secondary battery can be further reduced while also even further enhancing cycle characteristics of the secondary battery. Moreover, when the amount of coating film is 0.05 g or more, ease of production of the binder composition can be ensured well.

Note that the amount of coating film can be adjusted by altering the types and amounts of monomers used to produce the particulate polymer and the production method of the particulate polymer, for example. Specifically, in a situation in which the particulate polymer is produced by a batch emulsion polymerization method, the amount of coating film can be reduced by adopting two-stage polymerization rather than single-stage polymerization. Moreover, in a situation in which two-stage polymerization is adopted, the amount of coating film can be reduced by adding a nitrile group-containing monomer and/or an ethylenically unsaturated carboxylic acid ester monomer when a second stage of polymerization is performed.

### [Viscosity]

The viscosity of the presently disclosed binder composition under a condition of a solid content concentration of 30 mass% is preferably 60 mPa·s or more, more preferably 150 mPa·s or more, even more preferably 250 mPa·s or more, and particularly preferably 350 mPa·s or more, and is preferably 3,000 mPa·s or less, more preferably 2,500 mPa·s or less, even more preferably 2,000 mPa·s or less, and particularly preferably 1,400 mPa·s or less. When the viscosity under a condition of a solid content concentration of 30 mass% is not less than any of the lower limits set forth above, peel strength of an electrode can be improved. Moreover, when the viscosity under a condition of a solid content concentration of 30 mass% is not more than any of the upper limits set forth above, crater formation at an electrode surface can be further inhibited, and peel strength of an electrode can be improved.

Note that the viscosity of the binder composition under a condition of a solid content concentration of 30 mass% can be adjusted by altering the pH of the binder composition, for example. Specifically, the aforementioned viscosity can be reduced by lowering the pH of the binder composition, whereas the aforementioned viscosity can be increased by raising the pH of the binder composition.

### [pH]

In a case in which the binder composition contains water as a solvent, the pH of the binder composition is preferably 6 or higher, and more preferably 7 or higher, and is preferably 10 or lower, more preferably 9 or lower, and even more preferably 8 or lower. When the pH of the binder composition is not lower than any of the lower limits set forth above, peel strength of an electrode can be improved. On the other hand, when the pH of the binder composition is not higher than any of the upper limits set forth above, coating film formation can be inhibited by inhibiting an excessive increase of viscosity of the binder composition. Consequently, crater formation at an electrode surface can be further inhibited, and internal resistance of a secondary battery can be further reduced while also even further enhancing cycle characteristics of the secondary battery.

Note that pH adjustment can be performed through addition of an alkali species to the binder composition, for example. The alkali species may be lithium hydroxide, sodium hydroxide, potassium hydroxide, or ammonia water, for example, with ammonia water being preferable because of the low tendency for aggregates to form due to addition shock during alkali neutralization.

### <Production method of binder composition>

No specific limitations are placed on the method by which the presently disclosed binder composition is produced. For example, a water dispersion containing the particulate polymer that has been obtained by a method previously described in the "Production method of particulate polymer" section can be used in that form as the binder composition. Alternatively, the binder composition can be obtained by adding other components to a water dispersion containing the particulate polymer and performing mixing thereof by a known method. Note that in a case in which the binder composition is produced using a water dispersion containing the particulate polymer, liquid content (for example, water) of the water dispersion may be used in that form as a solvent of the binder composition. In addition, the pH of the binder composition can optionally be adjusted to within any of the preferable pH ranges set forth above, and the binder composition can optionally be filtered using a wire screen or the like so as to remove aggregates.

### (Slurry composition for secondary battery electrode)

The presently disclosed slurry composition is a composition in the form of a slurry that is used in an application of forming an electrode mixed material layer of an electrode and contains at least the binder composition set forth above and an electrode active material. For example, the presently disclosed slurry composition may contain an electrode active material and a binder in a solvent such as water and may further contain components (optional components) other than the solvent, the electrode active material, and the binder as necessary. Moreover, as a result of the presently disclosed slurry composition containing the binder composition set forth above, it is possible to inhibit crater formation at an electrode surface and to reduce internal resistance of a secondary battery while also causing the secondary battery to display excellent cycle characteristics when the slurry composition is used to produce an electrode.

### <Binder composition>

The presently disclosed binder composition set forth above is used as the binder composition.

Note that no specific limitations are placed on the amount of the binder composition that is compounded in the slurry composition. For example, the amount of the binder composition can be set as an amount such that, in terms of solid content, the amount of the binder is not less than 0.5 parts by mass and not more than 15 parts by mass per 100 parts by mass of the electrode active material.

### <Electrode active material>

Known electrode active materials that are used in secondary batteries can be used without any specific limitations as the electrode active material. Specifically, examples of electrode active materials that can be used in an electrode mixed material layer of a lithium ion secondary battery, which is one example of a secondary battery, include the following electrode active materials, but are not specifically limited thereto.

### [Positive electrode active material]

A positive electrode active material that is compounded in a positive electrode mixed material layer of a positive electrode in a lithium ion secondary battery may be a compound that includes a transition metal, for example, examples of which include transition metal oxides, transition metal sulfides, and complex metal oxides of lithium and transition metals. Examples of the transition metal include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

Note that one of the above-described positive electrode active materials may be used individually, or two or more of the above-described positive electrode active materials may be used in combination.

### [Negative electrode active material]

A negative electrode active material that is compounded in a negative electrode mixed material layer of a negative electrode in a lithium ion secondary battery may be a carbon-based negative electrode active material, a metal-based negative electrode active material, a negative electrode active material that is a combination thereof, or the like, for example.

The term "carbon-based negative electrode active material" as used here refers to an active material having a main framework of carbon into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

Moreover, the term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

Note that one of the above-described negative electrode active materials may be used individually, or two or more of the above-described negative electrode active materials may be used in combination.

### <Optional components>

Examples of optional components that can be compounded in the slurry composition include, but are not specifically limited to, the other components that were previously described in the "Binder composition for secondary battery electrode" section, dispersants, viscosity modifiers (thickeners) such as carboxymethyl cellulose, metal scavengers, and conductive materials such as carbon black. Note that one optional component may be used individually, or two or more optional components may be used in combination in a freely selected ratio.

### <Production of slurry composition>

No specific limitations are placed on the method by which the slurry composition is produced.

For example, the slurry composition can be produced by mixing the binder composition, the electrode active material, and optional components that are used as necessary in the presence of a solvent that originates from the binder composition, for example.

The method of mixing is not specifically limited and can be mixing through a typically used stirrer or disperser.

### (Electrode for secondary battery)

The presently disclosed electrode includes an electrode mixed material layer formed using the presently disclosed slurry composition set forth above. Accordingly, the electrode mixed material layer is formed of a dried product of the slurry composition set forth above, normally contains an electrode active material and a binder, and can further contain optional components. Note that components contained in the electrode mixed material layer are components that were contained in the slurry composition set forth above, and the preferred ratio of these components is the same as the preferred ratio of the components in the slurry composition. Moreover, although the particulate polymer is present in a particulate form in the slurry composition, the particulate polymer may have a particulate form or may have any other form in the electrode mixed material layer that is formed using the slurry composition.

As a result of the electrode mixed material layer of the presently disclosed electrode being formed using the slurry composition set forth above, crater formation at an electrode surface can be inhibited, and internal resistance of a secondary battery can be reduced while also causing the secondary battery to display excellent cycle characteristics.

### <Formation method of electrode>

The electrode mixed material layer that is included in the presently disclosed electrode can be formed using any of the following methods, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. This pressing process can improve close adherence between the electrode mixed material layer and the current collector and also enables densification of the obtained electrode mixed material layer. Furthermore, in a case in which the electrode mixed material layer contains a curable polymer, the polymer is preferably cured after the electrode mixed material layer has been formed.

### (Secondary battery)

The presently disclosed secondary battery includes a positive electrode, a negative electrode, an electrolyte solution, and a separator, wherein the presently disclosed electrode set forth above is used as at least one of the positive electrode and the negative electrode. Moreover, the presently disclosed secondary battery has excellent cycle characteristics and reduced internal resistance as a result of being produced by using the presently disclosed electrode set forth above as at least one of the positive electrode and the negative electrode.

Although the following describes, as one example, a case in which the secondary battery is a lithium ion secondary battery, the presently disclosed secondary battery is not limited to the following example.

### <Electrodes>

Known electrodes that are used in production of secondary batteries can be used without any specific limitations in the presently disclosed secondary battery as an electrode other than the presently disclosed electrode set forth above. Specifically, an electrode obtained by forming an electrode mixed material layer on a current collector by a known production method can be used as an electrode other than the presently disclosed electrode set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In the presently disclosed secondary battery, the presently disclosed electrode set forth above is used as at least one of the positive electrode and the negative electrode, and is preferably used as the negative electrode. The presently disclosed secondary battery may be provided with an overcurrent preventing device such as a fuse or a PTC device, an expanded metal, or a lead plate, as necessary, in order to prevent pressure increase inside the secondary battery and occurrence of overcharging or overdischarging. The shape of the secondary battery may be a coin type, button type, sheet type, cylinder type, prismatic type, or flat type, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the proportional contents of monomer units in a particulate polymer, the average particle diameter Da and volume-average particle diameter Db of a particulate polymer, the viscosity and amount of coating film of a binder composition, the number of craters at an electrode surface, the peel strength of an electrode, and the internal resistance and cycle characteristics of a secondary battery.

### <Proportional contents of monomer units>

The proportional content of each monomer unit in a particulate polymer was determined by determining an intensity ratio of a peak originating from that monomer unit in the particulate polymer by ¹H-NMR (nuclear magnetic resonance) and then converting the intensity ratio to a mass ratio.

### <Average particle diameter Da of particulate polymer>

The average particle diameter Da of a particulate polymer produced in each example or comparative example was measured using a particle size analyzer (produced by Otsuka Electronics Co., Ltd.; model: nanoSAQLA) having dynamic light scattering as a measurement principle. Specifically, a particle size distribution of a water dispersion of the particulate polymer was measured under the following conditions, and the particle diameter (D50) at which cumulative frequency of light scattering intensity calculated from a small diameter end in the measured particle size distribution reached 50% was determined as the average particle diameter Da (nm) of the particulate polymer.
Dispersion medium: Deionized water
Measurement temperature: 25 ± 1°C
Measurement concentration (solid content concentration): 0.5 mass%
Scattering angle: 168.8°
Light source laser wavelength: 660 nm

### <Volume-average particle diameter Db of particulate polymer>

The volume-average particle diameter Db of a particulate polymer produced in each example or comparative example was measured in accordance with JIS Z 8825 using a particle size analyzer (produced by Shimadzu Corporation; product name: SALD-2300) having laser diffraction/scattering as a measurement principle. Specifically, a water dispersion in which the solid content concentration of the particulate polymer had been adjusted to 0.1 mass% was measured by the aforementioned analyzer, and the particle diameter (D50) at which cumulative volume calculated from a small diameter end in the obtained particle size distribution (by volume) reached 50% was determined as the volume-average particle diameter Db (nm) of the particulate polymer.

### <Amount of coating film>

The solid content concentration of a binder composition produced in each example or comparative example was adjusted to 30 mass% with water so as to prepare a mixture. Note that in a situation in which the solid content concentration of the binder composition is lower than 30 mass%, a mixture having a solid content concentration of 30 mass% can be obtained by evaporating solvent so as to increase the solid content concentration. 10.0 g of the obtained mixture was poured into a polytetrafluoroethylene petri dish having an internal diameter of 10 cm and was left at rest under conditions of a temperature of 40°C and a humidity of 50% R.H. for 2 hours. Thereafter, the contents of the petri dish were filtered using a stainless steel plain weave wire screen (mesh: 200; wire diameter: 0.05 mm; opening size: 0.077 mm). After filtration, the mass (g) of residue on the wire screen was measured and was taken to be the amount of coating film.

### <Viscosity>

The solid content concentration of a binder composition produced in each example or comparative example was adjusted to 30 mass% with water, and then the viscosity of the binder composition was measured using a B-type viscometer (produced by Toki Sangyo Co., Ltd.; product name: TVB-10; rotation speed: 60 rpm). The temperature during viscosity measurement was 25°C. Note that when the viscosity of the binder composition is not less than 10 mPa·s and not more than 3,000 mPa·s, the binder composition can be considered to have good viscousness.

### <Number of craters>

An electrode produced in each example or comparative example was cut out as 30 cm in length by 10 cm in width, the surface at the electrode mixed material layer-side of the cut-out electrode was observed, and the number of craters having an opening size (internal diameter) of 1 cm or more was measured. Three measurements were made in this manner, an average value of the measurements was determined, and this average value was taken to be the number of craters. Note that in a case in which the average value was not an integer, the average value was rounded beyond the decimal point to convert the value to an integer. Moreover, the value was evaluated by the following standard.
A: Number of craters is 0
B: Number of craters is not less than 1 and not more than 3
C: Number of craters is not less than 4 and not more than 6
D: Number of craters is 7 or more

### <Peel strength>

An electrode produced in each example or comparative example was cut out as a rectangle of 100 mm in length and 10 mm in width to obtain a test specimen. The test specimen was placed with the surface of the electrode mixed material layer facing downward, and cellophane tape was affixed to the surface of the electrode mixed material layer. Tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. Three measurements were made in this manner, an average value of the measurements was determined, and this average value was taken to be the peel strength. Moreover, the peel strength was evaluated by the following standard.
A: Peel strength of 10 N/m or more
B: Peel strength of not less than 7 N/m and less than 10 N/m
C: Peel strength of not less than 5 N/m and less than 7 N/m
D: Peel strength of less than 5 N/m

### <Internal resistance>

IV resistance was measured as follows in order to evaluate the internal resistance of a lithium ion secondary battery produced in each example or comparative example. The lithium ion secondary battery was subjected to conditioning in which operations of charging to a voltage of 4.2 V at a charge rate of 0.1C, resting for 10 minutes, and then constant current (CC) discharging to 3.0 V at a discharge rate of 0.1C were repeated three times at a temperature of 25°C. Thereafter, the lithium ion secondary battery was charged to 3.75 V at 1C (C is a value expressed by rated capacity (mA)/1 hour (h)) and was subsequently subjected to 20 seconds of charging and 20 seconds of discharging at each of 0.5C, 1.0C, 1.5C, and 2.0C centered on 3.75 V in a -10°C atmosphere. The battery voltage after 15 seconds at the charging side was plotted against the current value for each case, and the gradient of the plot was determined as the IV resistance (Ω). The obtained IV resistance value (Ω) was evaluated according to the following standard through comparison with the IV resistance in Comparative Example 1. Note that a smaller IV resistance value indicates that the secondary battery has lower internal resistance.
A: Less than 85% relative to IV resistance in Comparative Example 1
B: Not less than 85% and less than 95% relative to IV resistance in Comparative Example 1
C: 95% or more relative to IV resistance in Comparative Example 1

### <Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant current method at a temperature of 25°C and was then subjected to 12 hours of aging at a temperature of 60°C. The lithium ion secondary battery was subsequently discharged to a cell voltage of 3.00 V by a 0.2C constant current method at a temperature of 25°C. Thereafter, the lithium ion secondary battery was constant current (CC) constant voltage (CV) charged (upper limit cell voltage 4.20 V) by a 0.2C constant current method and was CC discharged to 3.00 V by a 0.2C constant current method. This charging and discharging at 0.2C was repeated three times.

The lithium ion secondary battery was subsequently subjected to 100 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 100^{th} cycle was defined as X2.

The discharge capacity X1 and the discharge capacity X2 were used to determine a capacity maintenance rate indicated by ΔC = (X2/X1) × 100(%), which was then evaluated by the following standard. A larger value for this capacity maintenance rate ΔC indicates better cycle characteristics.
A: ΔC of 93% or more
B: ΔC of not less than 90% and less than 93%
C: ΔC of not less than 87% and less than 90%
D: ΔC of less than 87%

### (Example 1)

### <Production of binder composition for negative electrode>

### [Addition in first stage of polymerization]

A 5 MPa pressure-resistant vessel A equipped with a stirrer was charged with 22 parts of styrene (St) as an aromatic vinyl monomer, 70 parts of 1,3-butadiene (BD) as an aliphatic conjugated diene monomer, 1 part of methacrylic acid (MAA) as an acidic group-containing monomer, 0.6 parts of an alkyl diphenyl ether disulfonic acid salt as an emulsifier, 143 parts of deionized water, 0.1 parts of tert-dodecyl mercaptan as a chain transfer agent, and 0.3 parts of potassium persulfate as a polymerization initiator. These materials were thoroughly stirred, were then heated to 55°C to initiate polymerization, and were reacted for 10 hours. Next, these materials were heated to 65°C and were reacted for a further 6 hours.

### [Addition in second stage of polymerization]

Next, 2 parts of acrylonitrile (AN) as a nitrile group-containing monomer, 2 parts of methyl methacrylate (MMA) as an ethylenically unsaturated carboxylic acid ester monomer, and 3 parts of methacrylic acid (MAA) as an acidic group-containing monomer were added into the pressure-resistant vessel A, were heated to 85°C, and were reacted for a further 6 hours. Unreacted monomer was subsequently removed through thermal-vacuum distillation. The above yielded a water dispersion of a particulate polymer having a core-shell structure in which an outer surface of a core portion formed in the first stage of polymerization was at least partially covered by a shell portion formed in the second stage of polymerization.

### [pH adjustment and filtration]

The obtained water dispersion of the particulate polymer was neutralized with ammonia water so as to adjust the pH to 7. Thereafter, the water dispersion was cooled, and 1 part (in terms of solid content) of a Wingstay L dispersion (produced by Chukyo Yushi Co., Ltd.; catalog number: K-840) was added as an antioxidant. The water dispersion was subsequently dried in a polytetrafluoroethylene petri dish at 40°C for 2 hours and was then filtered using a stainless steel plain weave wire screen (mesh: 200; wire diameter: 0.05 mm; opening size: 0.077 mm) to yield a binder composition for a negative electrode.

This binder composition was used to measure the proportional contents of monomer units in the particulate polymer, the average particle diameter Da and volume-average particle diameter Db of the particulate polymer, the amount of coating film, and the viscosity of the binder composition. The results are shown in Table 1.

### <Production of slurry composition for negative electrode>

A planetary mixer equipped with a disper blade was charged with 100 parts of artificial graphite (tap density: 0.85 g/cm³; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Daicel Corporation; product name: Daicel 2200) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixture. Deionized water and 2.0 parts in terms of solid content of the binder composition produced as described above were added to the obtained mixture, and the final solid content concentration was adjusted to 48%. A further 10 minutes of mixing was performed, and then defoaming was performed under reduced pressure to yield a slurry composition for a negative electrode having good fluidity.

### <Formation of negative electrode>

The obtained slurry composition for a negative electrode was applied onto copper foil of 15 µm in thickness serving as a current collector by a comma coater at a speed of 3.6 m/min such as to have a coating weight after drying of 10.5 mg/cm². The slurry composition for a negative electrode was dried by conveying the copper foil inside a 140°C oven for 20 seconds and a 150°C oven for 20 seconds at a speed of 3.6 m/min. The resultant negative electrode web was rolled by roll pressing to obtain a negative electrode having a negative electrode mixed material layer density of 1.70 g/cm³. The number of craters at the surface and peel strength were evaluated for this negative electrode. The results are shown in Table 1.

### <Formation of positive electrode>

A slurry composition for a positive electrode was obtained by mixing 100 parts of LiCoO₂ having a median diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials in a planetary mixer.

The obtained slurry composition for a positive electrode was applied onto aluminum foil of 20 µm in thickness serving as a current collector by a comma coater such as to have a coating weight after drying of 23 mg/cm². The slurry composition for a positive electrode was dried by conveying the aluminum foil inside a 60°C oven for 2 minutes at a speed of 0.5 m/min. Thereafter, 2 minutes of heat treatment was performed at 120°C to obtain a positive electrode web. The positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The post-pressing positive electrode and negative electrode that were produced as described above were arranged with a separator (polypropylene microporous membrane of 20 µm in thickness) therebetween in an order of "separator/positive electrode/separator/negative electrode" to obtain a laminate. Next, the electrode and separator laminate was wound around a core of 20 mm in diameter to obtain a roll including a positive electrode, a separator, and a negative electrode. The obtained roll was then compressed to a thickness of 4.5 mm from one direction at a speed of 10 mm/s to obtain a flattened roll. This flattened roll had an elliptical shape in plan view, and a ratio of the major axis and the minor axis thereof (major axis/minor axis) was 7.7.

In addition, a non-aqueous electrolyte solution (LiPF₆ solution of 1.0 M in concentration; solvent: mixed solvent of ethylene carbonate (EC)/ethyl methyl carbonate (EMC) = 3/7 (mass ratio) having 2 volume% of vinylene carbonate (VC) added as an additive) was prepared.

Next, the flattened roll was housed inside a laminate case made of aluminum together with the non-aqueous electrolyte solution. After connecting a negative electrode lead and a positive electrode lead at specific locations, an opening of the laminate case was thermally sealed to produce a laminate-type lithium ion secondary battery as a non-aqueous secondary battery. Note that the obtained secondary battery had a pouch shape of 35 mm (width) × 48 mm (height) × 5 mm (thickness) and had a nominal capacity of 700 mAh.

The internal resistance and cycle characteristics of this lithium ion secondary battery were evaluated. The results are shown in Table 1.

### (Example 2)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition, the water dispersion of the particulate polymer was adjusted to a pH of 6 with ammonia water. Evaluations were conducted in the same manner as in Example 1. The results are shown in Table 1.

### (Example 3)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 23 parts of St, 71 parts of BD, and 0 parts of MAA
Second stage of polymerization: 2 parts of AN, 2 parts of MMA, and 2 parts of MAA

### (Example 4)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 22 parts of St, 72 parts of BD, and 1 part of MAA
Second stage of polymerization: 0 parts of AN, 2 parts of MMA, and 3 parts of MAA

### (Example 5)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 22 parts of St, 72 parts of BD, and 1 part of MAA
Second stage of polymerization: 2 parts of AN, 0 parts of MMA, and 3 parts of MAA

### (Example 6)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 18 parts of St, 70 parts of BD, and 1 part of MAA
Second stage of polymerization: 2 parts of AN, 2 parts of MMA, 3 parts of MAA, and 4 parts of St

### (Example 7)

A binder composition for a negative electrode, a slurry composition for a negative electrode, a negative electrode, a positive electrode, a separator, and a lithium ion secondary battery were prepared or produced in the same way as in Example 3 with the exception that in production of the binder composition, the water dispersion of the particulate polymer was adjusted to a pH of 6 with ammonia water. Evaluations were conducted in the same manner as in Example 1. The results are shown in Table 1.

### (Example 8)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 19 parts of St, 67 parts of BD, and 1 part of MAA
Second stage of polymerization: 8 parts of AN, 2 parts of MMA, and 3 parts of MAA

### (Example 9)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 1.
First stage of polymerization: 19 parts of St, 67 parts of BD, and 1 part of MAA
Second stage of polymerization: 2 parts of AN, 8 parts of MMA, and 3 parts of MAA

### (Comparative Example 1)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 2.
First stage of polymerization: 24 parts of St, 72 parts of BD, and 1 part of MAA
Second stage of polymerization: 3 parts of MAA

### (Comparative Example 2)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition, the water dispersion of the particulate polymer was adjusted to a pH of 4 with ammonia water. Evaluations were conducted in the same manner as in Example 1. The results are shown in Table 2.

### (Comparative Example 3)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 2.
First stage of polymerization: 16.5 parts of St, 59.5 parts of BD, and 1 part of MAA
Second stage of polymerization: 10 parts of AN, 10 parts of MMA, and 3 parts of MAA

### (Comparative Example 4)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition, the water dispersion of the particulate polymer was adjusted to a pH of 10 with ammonia water. Evaluations were conducted in the same manner as in Example 1. The results are shown in Table 2.

### (Comparative Example 5)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition, the additive amounts of monomers in the first stage and second stage of polymerization were changed as indicated below and the water dispersion of the particulate polymer was adjusted to a pH of 5 with ammonia water. Evaluations were conducted in the same manner as in Example 1. The results are shown in Table 2.
First stage of polymerization: 19 parts of St, 67 parts of BD, and 1 part of MAA
Second stage of polymerization: 2 parts of AN, 2 parts of MMA, and 9 parts of MAA

### (Comparative Example 6)

A slurry composition for a negative electrode, a negative electrode, a positive electrode, a separator, and a lithium ion secondary battery were prepared or produced in the same way as in Example 1 with the exception that a binder composition for a negative electrode that was produced as described below was used. Evaluations were conducted in the same manner as in Example 1. The results are shown in Table 2.

### <Production of binder composition for negative electrode>

A 5 MPa pressure-resistant vessel A equipped with a stirrer was charged with 22 parts of styrene (St) as an aromatic vinyl monomer, 70 parts of 1,3-butadiene (BD) as an aliphatic conjugated diene monomer, 4 parts of methacrylic acid (MAA) as an acidic group-containing monomer, 2 parts of acrylonitrile (AN) as a nitrile group-containing monomer, 2 parts of methyl methacrylate (MMA) as an ethylenically unsaturated carboxylic acid ester monomer, 0.6 parts of an alkyl diphenyl ether disulfonic acid salt as an emulsifier, 143 parts of deionized water, 0.1 parts of tert-dodecyl mercaptan as a chain transfer agent, and 0.3 parts of potassium persulfate as a polymerization initiator all at once. These materials were thoroughly stirred, were then heated to 55°C to initiate polymerization, and were reacted for 10 hours. Next, these materials were heated to 65°C and were reacted for a further 6 hours. Unreacted monomer was subsequently removed through thermal-vacuum distillation to yield a water dispersion of a particulate polymer. The obtained water dispersion of the particulate polymer was neutralized with ammonia water so as to adjust the pH to 7. Thereafter, the water dispersion was cooled, and 1 part (in terms of solid content) of a Wingstay L dispersion was added as an antioxidant. The water dispersion was subsequently dried in a polytetrafluoroethylene petri dish at 40°C for 2 hours and was then filtered using a stainless steel plain weave wire screen (mesh: 200; wire diameter: 0.05 mm; opening size: 0.077 mm) to yield a binder composition for a negative electrode.

### (Comparative Example 7)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 2.
First stage of polymerization: 18 parts of St, 66 parts of BD, and 1 part of MAA
Second stage of polymerization: 10 parts of AN, 2 parts of MMA, and 3 parts of MAA

### (Comparative Example 8)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amounts of monomers in the first stage and second stage of polymerization were changed as indicated below. Evaluations were conducted in the same manner as in Example 1. The results are shown in Table 2.
First stage of polymerization: 18 parts of St, 66 parts of BD, and 1 part of MAA
Second stage of polymerization: 2 parts of AN, 10 parts of MMA, and 3 parts of MAA

In Tables 1 and 2, shown below:
"St" indicates styrene unit;
"BD" indicates 1,3-butadiene unit;
"MAA" indicates methacrylic acid unit;
"AN" indicates acrylonitrile unit;
"MMA" indicates methyl methacrylate unit;
"Viscosity" indicates viscosity under condition of solid content concentration of 30 mass%; and
"Da/Db" indicates ratio of average particle diameter Da of particulate polymer measured by dynamic light scattering relative to volume-average particle diameter Db of particulate polymer measured by laser diffraction/scattering.

Moreover, in Tables 1 and 2, "Da/Db" is expressed as a value that has been rounded at the second decimal place.

**[Table 1]**

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| | | | Aromatic vinyl monomer unit | Type | St | St | St | St | St | St | St | St | St |
| | | | | Amount [parts by mass] | 22 | 22 | 23 | 22 | 22 | 18 | 23 | 19 | 19 |
| | | | Aliphatic conjugated diene monomer unit | Type | BD | BD | BD | BD | BD | BD | BD | BD | BD |
| | | Addition in first stage of polymerization | | Amount [parts by mass] | 70 | 70 | 71 | 72 | 72 | 70 | 71 | 67 | 67 |
| | | | Acidic group-containing monomer unit | Type | MAA | MAA | - | MAA | MAA | MAA | - | MAA | MAA |
| | | | | Amount [parts by mass] | 1 | 1 | - | 1 | 1 | 1 | - | 1 | 1 |
| | | | Nitrile group-containing monomer unit | Type | - | - | - | - | - | - | - | - | - |
| | | | | Amount [parts by mass] | - | - | - | - | - | - | - | - | - |
| | | | Ethylenically unsaturated carboxylic acid ester monomer unit | Type | - | - | - | - | - | - | - | - | - |
| | Particulate polymer | | | Amount [parts by mass] | - | - | - | - | - | - | - | - | - |
| | | | Aromatic vinyl monomer unit | Type | - | - | - | - | - | St | - | - | - |
| Binder composition | | | | Amount [parts by mass] | - | - | - | - | - | 4 | - | - | - |
| | | | Aliphatic conjugated diene monomer unit | Type | - | - | - | - | - | - | - | - | - |
| | | Addition in second stage of polymerization | | Amount [parts by mass] | - | - | - | - | - | - | - | - | - |
| | | | Acidic group-containing monomer unit | Type | MAA | MAA | MAA | MAA | MAA | MAA | MAA | MAA | MAA |
| | | | | Amount [parts by mass] | 3 | 3 | 2 | 3 | 3 | 3 | 2 | 3 | 3 |
| | | | Nitrile group-containing monomer unit | Type | AN | AN | AN | - | AN | AN | AN | AN | AN |
| | | | | Amount [parts by mass] | 2 | 2 | 2 | - | 2 | 2 | 2 | 8 | 2 |
| | | | Ethylenically unsaturated carboxylic acid ester monomer unit | Type | MMA | MMA | MMA | MMA | - | MMA | MMA | MMA | MMA |
| | | | | Amount [parts by mass] | 2 | 2 | 2 | 2 | - | 2 | 2 | 2 | 8 |
| | | Average particle diameter (Da) [nm] | | | 220 | 170 | 180 | 220 | 220 | 220 | 145 | 260 | 260 |
| | | Volume-average particle diameter (Db) [nm] | | | 130 | 130 | 130 | 130 | 130 | 130 | 130 | 130 | 130 |
| | | Da/Db [-] | | | 1.7 | 1.3 | 1.4 | 1.7 | 1.7 | 1.7 | 1.1 | 2.0 | 2.0 |
| | Amount of coating film [g] | | | | 0.5 | 1.0 | 1.0 | 1.0 | 1.0 | 1.0 | 1.0 | 1.0 | 1.0 |
| | Viscosity [mPa·s] | | | | 1000 | 200 | 300 | 1500 | 1500 | 1500 | 60 | 3000 | 3000 |
| | pH [-] | | | | 7 | 6 | 7 | 7 | 7 | 7 | 6 | 7 | 7 |
| Evaluation | Number of craters | | | | A | B | B | c | A | A | A | B | B |
| | Peel strength | | | | A | B | B | A | B | B | B | B | B |
| | Internal resistance | | | | A | B | B | B | A | A | A | A | A |
| | Cycle characteristics | | | | A | A | A | B | B | A | B | A | A |

**[Table 2]**

| | | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| | | | Aromatic vinyl monomer unit | Type | St | St | St | St | St | St | St | St |
| | | | | Amount [parts by mass] | 24 | 22 | 16.5 | 22 | 19 | 22 | 18 | 18 |
| | | | Aliphatic conjugated diene monomer unit | Type | BD | BD | BD | BD | BD | BD | BD | BD |
| | | | | Amount [parts by mass] | 72 | 70 | 59.5 | 70 | 67 | 70 | 66 | 66 |
| | | | Acidic group-containing monomer unit | Type | MAA | MAA | MAA | MAA | MAA | MAA | MAA | MAA |
| | | Addition in first stage of polymerization | | Amount [parts by mass] | 1 | 1 | 1 | 1 | 1 | 4 | 1 | 1 |
| | | | Nitrile group-containing monomer unit | Type | - | - | - | - | - | AN | - | - |
| | | | | Amount [parts by mass] | - | - | - | - | - | 2 | - | - |
| | | | Ethylenically unsaturated carboxylic acid ester monomer unit | Type | - | - | - | - | - | MMA | - | - |
| | Particulate polymer | | | Amount [parts by mass] | - | - | - | - | - | 2 | - | - |
| | | | Aromatic vinyl monomer unit | Type | - | - | - | - | - | - | - | - |
| Binder composition | | | | Amount [parts by mass] | - | - | - | - | - | - | - | - |
| | | | Aliphatic conjugated diene monomer unit | Type | - | - | - | - | - | - | - | - |
| | | Addition in second stage of polymerization | | Amount [parts by mass] | - | - | - | - | - | - | - | - |
| | | | Acidic group-containing monomer unit | Type | MAA | MAA | MAA | MAA | MAA | - | MAA | MAA |
| | | | | Amount [parts by mass] | 3 | 3 | 3 | 3 | 9 | - | 3 | 3 |
| | | | Nitrile group-containing monomer unit | Type | - | AN | AN | AN | AN | - | AN | AN |
| | | | | Amount [parts by mass] | - | 2 | 10 | 2 | 2 | - | 10 | 2 |
| | | | Ethylenically unsaturated carboxylic acid ester monomer unit | Type | - | MMA | MMA | MMA | MMA | - | MMA | MMA |
| | | | | Amount [parts by mass] | - | 2 | 10 | 2 | 2 | - | 2 | 10 |
| | | Average particle diameter (Da) [nm] | | | 135 | 135 | 210 | 300 | 290 | 135 | 280 | 270 |
| | | Volume-average particle diameter (Db) [nm] | | | 130 | 130 | 130 | 130 | 130 | 130 | 130 | 130 |
| | | Da/Db [-] | | | 1.0 | 1.0 | 1.6 | 2.3 | 2.2 | 1.0 | 2.2 | 2.1 |
| | Amount of coating film [g] | | | | 3.0 | 3.0 | 1.5 | 3.0 | 3.0 | 3.0 | 3.0 | 3.0 |
| | Viscosity [mPa·s] | | | | 50 | 50 | 1000 | 20000 | 3000 | 50 | 15000 | 10000 |
| | pH [-] | | | | 7 | 4 | 7 | 10 | 5 | 7 | 7 | 7 |
| Evaluation | Number of craters | | | | D | D | D | D | D | D | D | D |
| | Peel strength | | | | C | C | D | C | C | D | D | D |
| | Internal resistance | | | | C | C | B | C | C | C | C | C |
| | Cycle characteristics | | | | C | C | D | C | C | C | C | C |

It can be seen from Table 1 that in Examples 1 to 9 in which a binder composition resulting in an amount of coating film that is not more than a specific value was used, it was possible to produce an electrode in which crater formation was inhibited and a secondary battery having reduced internal resistance and excellent cycle characteristics.

In contrast, it can be seen from Table 2 that in Comparative Examples 1, 2, and 4 to 8 in which a binder composition resulting in an amount of coating film that exceeds a specific value was used, it was not possible to sufficiently inhibit crater formation at an electrode surface, and there was also an increase of internal resistance of a secondary battery and poorer cycle characteristics.

It can also be seen from Table 2 that in Comparative Example 3 in which a binder composition resulting in an amount of coating film that exceeds a specific value was used, it was not possible to sufficiently inhibit crater formation at an electrode surface, and cycle characteristics of a secondary battery were poorer.

### INDUSTRIAL APPLICABILITY

According to the present disclosure, it is possible to provide a binder composition for a secondary battery electrode and a slurry composition for a secondary battery electrode that are capable of forming an electrode for a secondary battery in which crater formation at the electrode surface is inhibited and that can also reduce internal resistance of a secondary battery and cause the secondary battery to display excellent cycle characteristics.

Moreover, according to the present disclosure, it is possible to provide an electrode for a secondary battery in which crater formation at an electrode surface is inhibited and that can reduce internal resistance of a secondary battery and cause the secondary battery to display excellent cycle characteristics.

Furthermore, according to the present disclosure, it is possible to provide a secondary battery that has reduced internal resistance and excellent cycle characteristics.

## Claims

1. A binder composition for a secondary battery electrode comprising a binder, wherein
an amount of coating film resulting after 10.0 g of a mixture obtained by adjusting the binder composition for a secondary battery electrode to a solid content concentration of 30 mass% with water is poured into a polytetrafluoroethylene petri dish of 10 cm in diameter and is left at rest at a temperature of 40°C for 2 hours is 1.3 g or less.

2. The binder composition for a secondary battery electrode according to claim 1, wherein
the binder includes a particulate polymer, and
the particulate polymer includes a nitrile group-containing monomer unit in a proportion of not less than 1 mass% and not more than 9 mass% and includes an ethylenically unsaturated carboxylic acid ester monomer unit in a proportion of not less than 1 mass% and not more than 9 mass%.

3. The binder composition for a secondary battery electrode according to claim 2, wherein the particulate polymer is a random copolymer.

4. The binder composition for a secondary battery electrode according to claim 2, wherein when an average particle diameter of the particulate polymer measured by dynamic light scattering is taken to be Da, in units of nanometers, and a volume-average particle diameter of the particulate polymer measured by laser diffraction/scattering is taken to be Db, in units of nanometers, a ratio Da/Db of Da relative to Db is not less than 1.1 and not more than 2.0.

5. The binder composition for a secondary battery electrode according to claim 1, wherein viscosity of the binder composition for a secondary battery electrode under a condition of a solid content concentration of 30 mass% is not less than 60 mPa·s and not more than 3,000 mPa·s.

6. The binder composition for a secondary battery electrode according to claim 1, further comprising water and having a pH of not lower than 6 and not higher than 10.

7. A slurry composition for a secondary battery electrode comprising: an electrode active material; and the binder composition for a secondary battery electrode according to any one of claims 1 to 6.

8. An electrode for a secondary battery comprising an electrode mixed material layer formed using the slurry composition for a secondary battery electrode according to claim 7.

9. A secondary battery comprising the electrode for a secondary battery according to claim 8.
